(19)

**Europäisches Patentamt**

**European Patent Office**

**Office européen des brevets**

(11) **EP 4 715 501 A1**

(12) **EUROPEAN PATENT APPLICATION**

(43) Date of publication:
25.03.2026 Bulletin 2026/13

(21) Application number: 24201148.4

(22) Date of filing: 18.09.2024

(51) International Patent Classification (IPC):
*G05B 19/404* (2006.01)

(52) Cooperative Patent Classification (CPC):
**G05B 19/404;** G05B 13/0265; G05B 2219/49062;
G05B 2219/49063; G05B 2219/49065;
G05B 2219/49069

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(71) Applicant: **Siemens Aktiengesellschaft**
**80333 München (DE)**

(72) Inventors:
• **Fainstein, Boris**
**93914 Jerusalem (IL)**

• **Gonorezky, Boris**
**6937703 Tel Aviv (IL)**
• **Melnitzer, Alexander**
**9343012 Jerusalem (IL)**
• **Kazakov, Michael**
**93907 Jerusalem (IL)**
• **Schneidman, Alex**
**9626104 Jerusalem (IL)**
• **Zuaretz, Eli**
**6092000 Kadima-Tzoran (IL)**

(74) Representative: **Siemens Patent Attorneys**
**Postfach 22 16 34**
**80506 München (DE)**

(54) **A METHOD AND SYSTEM FOR CONTROLLING THE OPERATION OF A CNC MACHINE FOR MACHINING A WORKPIECE**

(57)      The present invention discloses a method and a system for controlling the operation of a CNC machine for machining a workpiece, said method comprising:

a) during a learning stage machining the workpiece without adaptive control under regular cutting conditions, thereby learning the power and vibration patterns of the workpiece for different tools and building power consumption and surface roughness models for each cutting operation of the machining;

b) based on the created models and a predefined optimization strategy, calculating objective function values and constrains to be implemented by an adaptive control function;

c) at an operation stage machining the workpiece with the adaptive control function thereby modifying the cutting conditions, such as cutting feed and spindle speed, in real time to achieve the calculated objective function values while maintaining the constrains. After each workpiece the power consumption and surface roughness models objective function values are corrected based on collected data.

Figure 6

**EP 4 715 501 A1**

**Description**

TECHNICAL FIELD

This application is generally related to a method for the control of CNC machining and, more specifically, addresses the energy conservation and environmental protection issues of CNC machining.

BACKGROUND OF THE DISCLOSURE

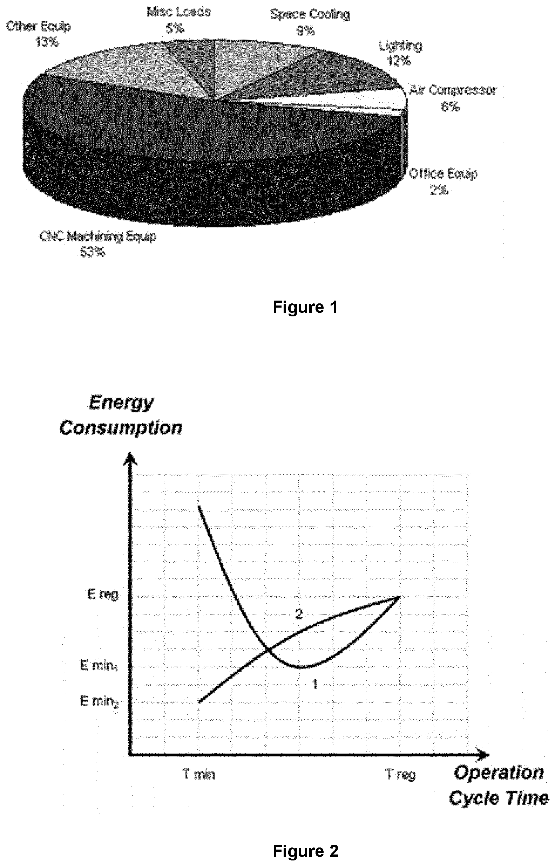

Metal cutting machines are energy-intensive and as resources become scarce and energy costs rise, energy-related issues are having an increasing impact on the machine tool industry - especially since CNC machining can account for over half of the total energy consumption at machine shops. Figure 1 shows the energy consumption pattern of a typical CNC Machining Facility.

In addition, reduction of energy consumption in metal machining mitigates the negative environmental impacts to achieve a much greater measure of "Sustainable Manufacturing" in this highly energy intensive industry.

Therefore, there exists a significant demand for smart energy consumption that must be seen in the context of the enormous size of the machine tool industry (400,000 new machines annually) and the massive number of machines in operation throughout the world (over 4,000,000 machines) in the key automotive, aerospace, power generation, machinery manufacturing and virtually every industrial sector.

In the past, the machine tool industry has focused primarily on productivity enhancements and no technological tools have been available for "Greening" the production floor. While many companies have now embraced the concepts of "green" and "sustainability", currently available conservation efforts for industrial facilities relate primarily to non-cutting phases of manufacturing - shutting down of idle machine components and technologies such as insulation, lighting, cooling, and heating systems. There is presently no technology available that can monitor, control, and economize energy consumption on individual machines during cutting while maintaining the machine productivity and part surface quality.

In some cases, the existing Adaptive Control systems based on cutting time minimization criteria can at the same time minimize energy consumption, but this solution is not universal and has significant drawbacks. The explanation below shows that adaptive control with cutting time minimization objective in some cases results in increase in energy consumption and may affect the surface quality.

The overall energy consumption of the machine is composed of the following components:

i) Energy consumed by the machine spindle and axes during actual machining. This component is significantly influenced by the intensity of machining - hereinafter referred to as $E_N$; and

ii) Energy consumed by the rest of the machine electric components such as coolant, hydraulic and compressed air pumps, tool changer, chip conveyer, etc. This component is nearly constant during machining time, and it is not affected by the machining intensity - hereinafter referred to as EM.

More intensive machining increases the cutting energy but reduces the cutting time and thus reduces the base energy consumed by the rest of the machine. Depending on the type and design of the machine, on the type of cutting application (material, roughing, finishing, etc.) and on the type of cutting tools used, the ratio between these two components of the total energy consumption can vary significantly. Figure 2 displays two possible scenarios of machining energy consumption behavior depending on the intensity of machining:

In Figure 2, E represents the total energy consumed during a complete machining operation while T is the total operation cycle time in which the operation is completed. Obviously more intensive machining (higher cutting speed) reduces the total cutting time T.

The Graph 2 represents the cutting of soft materials or cutting with small tools or semi-finishing or finishing operations where the energy consumed by the spindle is significantly lower than the energy consumed by the other electrical equipment such as tool changer, hydraulics, etc. In this case, the minimum energy consumption (Emin2) is achieved through most intensive machining.

The Graph 1 represents machining cases of heavy cutting of hard materials using large tools where the energy consumed by the spindle is comparable to the energy consumed by the other electrical equipment.

In this case, the machining time must be compromised to minimize the overall energy consumption as the main criterion and less intensive machining could reduce the energy consumption at the expense of cutting time. In this scenario, one can always find a point where energy consumption is minimized, and the cutting time is still less than regular cutting time. ($T_{reg}$).

In summary, the cutting time minimization strategy is not a universal strategy for achieving the minimum energy consumption. In addition, cutting time minimization strategy (intensive machining) may reflect the surface quality. At present, there are no reliable in-process real time monitoring systems for quality assessment.

Therefore, it is the objective of the present invention to provide a method for the control of CNC machining.

SUMMARY OF THE DISCLOSURE

Various disclosed embodiments include methods, systems, and computer readable mediums for the control of CNC machining and, more specifically, that addresse the energy conservation and environmental protection issues of CNC machining.

With respect to the method, the aforementioned objective is achieved according to the present invention by a method for controlling the operation of a CNC machine for machining a workpiece, said method comprising:

a) during a learning stage machining the workpiece without adaptive control under regular cutting conditions, thereby learning the power and vibration patterns of the workpiece for different tools and building power consumption and surface roughness models for each cutting operation of the machining;

b) based on the created models and a predefined optimization strategy, calculating objective function values and constrains to be implemented by an adaptive control function;

c) at an operation stage machining the workpiece with the adaptive control function thereby modifying the cutting conditions, such as cutting feed and spindle speed, in real time to achieve the calculated objective function values while maintaining the constrains. After each workpiece the power consumption and surface roughness models objective function values are corrected based on collected data.

This method therefore overcomes the drawback of the current technology. The present invention provides an optimization strategy that controls the machining conditions (cutting feed and speed) in real time and minimizes the machine energy consumption for given cutting operation while maintaining the required cutting time and part surface quality.

A preferred embodiment of the present invention can be achieved when after the workpiece is machined, objective function values for the power consumption and the surface roughness models are corrected being based on the data collected during the machining of the workpiece with the adaptive control function.

A further preferred embodiment of the present invention can be achieved when the adaptive control function is evaluating relevant machining parameters in terms of the following dynamic variations that occur during machining:

i) cutting depth and width variations;
ii) tool sharpness decrease during machining;
iii) workpiece material hardness and surface variations;
iv) chip accumulation;
v) cooling quality variations;
vi) fixture instability;

and other variations inherent in the machining process.

The foregoing has outlined rather broadly the features and technical advantages of the present disclosure so that those skilled in the art may better understand the detailed description that follows. Additional features and advantages of the disclosure will be described hereinafter that form the subject of the claims. Those skilled in the art will appreciate that they may readily use the conception and the specific embodiment disclosed as a basis for modifying or designing other structures for carrying out the same purposes of the present disclosure. Those skilled in the art will also realize that such equivalent constructions do not depart from the spirit and scope of the disclosure in its broadest form.

Before undertaking the DETAILED DESCRIPTION below, it may be advantageous to set forth definitions of certain words or phrases used throughout this patent document: the terms "include" and "comprise," as well as derivatives thereof, mean inclusion without limitation; the term "or" is inclusive, meaning and/or; the phrases "associated with" and "associated therewith," as well as derivatives thereof, may mean to include, be included within, interconnect with, contain, be contained within, connect to or with, couple to or with, be communicable with, cooperate with, interleave, juxtapose, be proximate to, be bound to or with, have, have a property of, or the like; and the term "controller" means any device, system or part thereof that controls at least one operation, whether such a device is implemented in hardware, firmware, software or some combination of at least two of the same. It should be noted that the functionality associated with any particular controller may be centralized or distributed, whether locally or remotely. Definitions for certain words and phrases are provided throughout this patent document, and those of ordinary skill in the art will understand that such definitions apply in many, if not most, instances to prior as well as future uses of such defined words and phrases. While some terms may include a wide variety of embodiments, the appended claims may expressly limit these terms to specific embodiments.

BRIEF DESCRIPTION OF THE DRAWINGS

For a more complete understanding of the present disclosure, and the advantages thereof, reference is now made to the following descriptions taken in conjunction with the accompanying drawings, wherein like numbers designate like objects, and in which:

Figure 1 schematically illustrates the energy consumption pattern of a typical CNC Machining Facility.

Figure 2 schematically illustrates the energy consumption of a CNC machine as function of the cutting intensity.

Figure 3 schematically illustrates a block diagram of a data processing system that can be used for a method for the control of CNC machining.

Figure 4 schematically illustrates a diagram for the energy consumption optimization of the operation of a CNC machine.

Figure 5 schematically illustrates a simulation of the total energy consumption: S=12m.

Figure 6 schematically illustrates the structure of a system for machine energy optimization.

DETAILED DESCRIPTION

FIGURES 1 through 6, discussed below, and the various embodiments used to describe the principles of the present disclosure in this patent document are by way of illustration only and should not be construed in any way to limit the scope of the disclosure. Those skilled in the art will understand that the principles of the present disclosure may be implemented in any suitably arranged device. The numerous innovative teachings of the present application will be described with reference to exemplary non-limiting embodiments.

Furthermore, in the following the solution according to the embodiments is described with respect to methods and systems for the control of CNC machining. Features, advantages, or alternative embodiments herein can be assigned to the other claimed objects and vice versa. In other words, claims for methods and systems for the control of CNC machining that is intended to support the optimization of the CNC machining process can be improved with features described or claimed in context of the methods and systems.

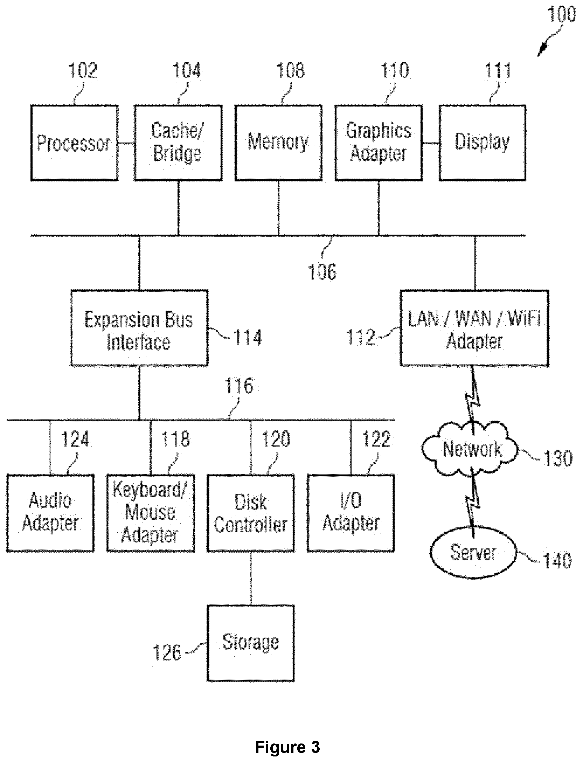

Figure 3 illustrates a block diagram of a data processing system 100 in which an embodiment can be implemented, for example as a PDM system particularly configured by software or otherwise to perform the processes as described herein, and in particular as each one of a plurality of interconnected and communicating systems as described herein. The data processing system 100 illustrated can include a processor 102 connected to a level two cache/bridge 104, which is connected in turn to a local system bus 106. Local system bus 106 may be, for example, a peripheral component interconnect (PCI) architecture bus. Also connected to local system bus in the illustrated example are a main memory 108 and a graphics adapter 110. The graphics adapter 110 may be connected to display 111.

Other peripherals, such as local area network (LAN) / Wide Area Network / Wireless (e.g. WiFi) adapter 112, may also be connected to local system bus 106. Expansion bus interface 114 connects local system bus 106 to input/output (I/O) bus 116. I/O bus 116 is connected to keyboard/mouse adapter 118, disk controller 120, and I/O adapter 122. Disk controller 120 can be connected to a storage 126, which can be any suitable machine usable or machine readable storage medium, including but are not limited to nonvolatile, hard-coded type mediums such as read only memories (ROMs) or erasable, electrically programmable read only memories (EEPROMs), magnetic tape storage, and user-recordable type mediums such as floppy disks, hard disk drives and compact disk read only memories (CD-ROMs) or digital versatile disks (DVDs), and other known optical, electrical, or magnetic storage devices.

Also connected to I/O bus 116 in the example shown is audio adapter 124, to which speakers (not shown) may be connected for playing sounds. Keyboard/mouse adapter 118 provides a connection for a pointing device (not shown), such as a mouse, trackball, trackpointer, touchscreen, etc.

Those of ordinary skill in the art will appreciate that the hardware illustrated in Figure 3 may vary for particular implementations. For example, other peripheral devices, such as an optical disk drive and the like, also may be used in addition or in place of the hardware illustrated. The illustrated example is provided for the purpose of explanation only and is not meant to imply architectural limitations with respect to the present disclosure.

A data processing system in accordance with an embodiment of the present disclosure can include an operating system employing a graphical user interface. The operating system permits multiple display windows to be presented in the graphical user interface simultaneously, with each display window providing an interface to a different application or to a different instance of the same application. A cursor in the graphical user interface may be manipulated by a user through the pointing device. The position of the cursor may be changed and/or an event, such as clicking a mouse button, generated to actuate a desired response.

One of various commercial operating systems, such as a version of Microsoft Windows™, a product of Microsoft Corporation located in Redmond, Wash. may be employed if suitably modified. The operating system is modified or created in accordance with the present disclosure as described.

LAN/ WAN/Wireless adapter 112 can be connected to a network 130 (not a part of data processing system 100), which can be any public or private data processing system network or combination of networks, as known to those of skill in the art, including the Internet. Data processing system 100 can communicate over network 130 with server system 140, which is also not part of data processing system 100, but can be implemented, for example, as a separate data processing system 100.

As explained above, the method according to the present invention is intended to help users in the area of methods and systems for the control of CNC machining and, more specifically, addresses the energy conservation and environmental protection issues of CNC machining.

The present invention can be defined as a real time self-optimizing adaptive control method and system which continuously analyses the full array of critical machining process parameters and automatically adapt the machine operation in real-time to achieve the optimal machine energy consumption.

The enabling technological base for the method according to the present invention is adaptive control technology that for each operation automatically adapts critical machining parameters to the following dynamic variations that occur during machining:

    i) cutting depth and width variations;
    ii) tool sharpness decrease during machining;
    iii) workpiece material hardness and surface variations;
    iv) chip accumulation;
    v) cooling quality variations;
    vi) fixture instability;

and other variations inherent in the machining process.

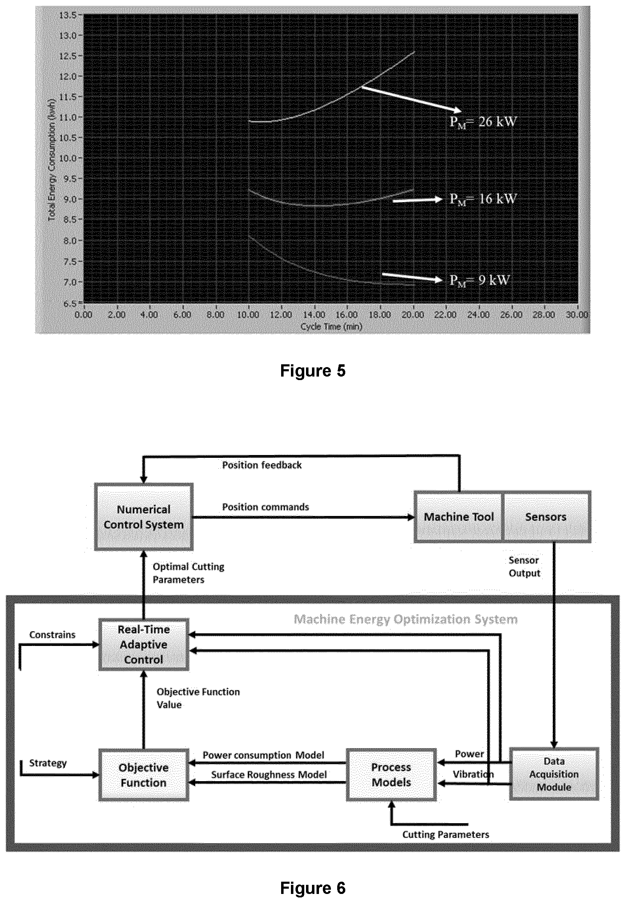

The optimization strategy will be to control machining conditions (cutting feed and speed) in real time to minimize the machine energy consumption for given cutting operation while maintaining the required cutting time and part surface quality (see block diagram in Figure 6).

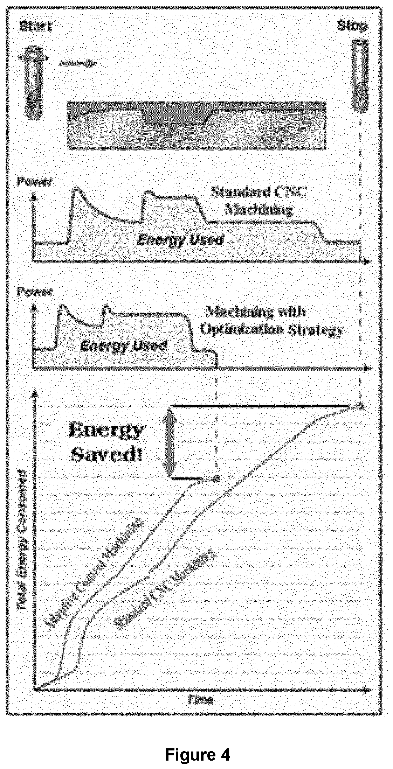

The chart in Fig.4 shows an example of what could be obtained with this optimization strategy according to the present invention. The area under the upper Power-Time chart represents the energy used during a standard machining operation without adaptive control. The area under the lower Power-Time chart represents the energy used during the same machining operation while applying the optimization strategy according to the present invention. The lowest Energy-Time chart shows the energy consumption in each case and the energy saving as a result of applying the inventive optimization strategy compared with standard machining. In this case, more intensive machining (see steeper climb of the left graph) has enabled maximum energy saving while reducing the machining operation time. The optimization goal is to find the optimal balance between the above mentioned two components of the machine energy consumption.

The description below proves the theoretical feasibility of such optimization. The total electrical energy consumption of the machine tool can be calculated by the formula: or

$$E_T = E_M + E_N \qquad \text{[kWh]} \qquad (1)$$

or

$$E_T = \frac{(P_M \times t + P_N \times t)}{60} \qquad \text{[kWh]} \qquad (2)$$

where:

    $E_T$ - total energy consumed for a given cutting job
    $E_M$ - energy consumed by the machine excluding actual cutting energy (coolant pumps, chip conveyor, etc.) - basic energy
    $E_N$ - energy required to remove the predefined amount of material - actual cutting energy
    $P_M$ - power of the machine excluding actual cutting power (basic power)
    $P_N$ - actual cutting power
    t - cutting (cycle) time in min

The cutting power depends on stock removal, tool type, tool geometry and the cutting data (cutting speed and feed). The cutting power for cutting operation can be calculated by well-known and commonly used formula:

$$P_N = K_1 \times a_e \times a_p \times F \times K_c \qquad \text{[kW]} \quad (3)$$

where:

$a_e$ - width of cut in mm
$a_p$ - depth of cut in mm
F - cutting feed in mm/min
$K_c$ - specific cutting force
$K_1$ - aggregate coefficient reflecting tool and machine parameters

The Specific Cutting Force (Kc) expresses the force in the cutting direction, required to cut a chip area of one square millimeter that has a thickness of 1 millimeter with a top rake angle of 0°. The cutting force (Kc) is a superposition of a few forces: plastic deformation force, friction force, chip removal resistance force, etc. and in general form can be represented by the following formula:

$$K_c = K_2 \times f_z^y \quad \text{[N]} \qquad (4)$$

where:

$f_z$ - feed per tooth in mm/tooth
$K_2$ - overall correction coefficient reflecting material and tool parameters parameters.

By substituting equation (4) into equation (3) and considering that $f_z = \dfrac{F}{z \times n}$ obtain

$$P_N = K_1 \times K_2 \times a_e \times a_p \times F \times \left(\frac{F}{z \times n}\right)^y \quad \text{[kW]} \qquad (5)$$

where:

z - number of inserts (teeth)
n - spindle speed in rpm

Since all parameters in the formula (4) except cutting feed (feed per tooth - fz) are constant, for a given cutting job

$$P_N = K \times F^{y+1}$$

where K - aggregate coefficient
As a result, formula (2) for $E_T$ - total energy consumed for a given cutting job is expressed as follows:

$$E_T = \frac{(P_M \times t + K \times F^{y+1} \times t)}{60} \qquad \text{[kWh]} \qquad (6)$$

Formula (6) is easily transformed to the following formula:

$$E_T = \frac{(P_M \times t + K \times S^{y+1} \times t^{-y})}{60} \qquad \text{[kWh]} \qquad (7)$$

where: $S = F \times t$ - cutting distance in mm
The formula (7) shows that the total energy consumption, as a function of time for a given cutting job, is a sum of linear and power functions. This type of function must have a minimum and not necessarily at the extreme points (minimum or maximum t), which means that the energy minimization criterion can be achieved.

EP 4 715 501 A1

To check that formula (7) represents the real cutting scenarios, and that minimum energy consumption can be achieved in real cutting conditions the simulation of machine energy consumption on LabView environment was performed.

The simulation was performed for different basic power $P_M$ and the cutting length 12m (Fig. 5) which for technologically feasible variations of feed per tooth translates into cycle time range from 10 min to 20 min and respectively in variations in cutting power from 10.8kW to 19.5kW.

The simulation shows that the minimum energy consumption for a given job can be reached at different cycle times depending on the ratio between the energy consumed by the actual cutting and the rest of energy consumed by the machine. For example, the white graph represents the case when the basic power (26 kW) is significantly higher than cutting power. This graph is corresponding to graph 2 from Fig. 2 and minimum of total energy consumption is reached with the most intensive cutting. To the contrary, the lower graph shows the opposite ratio between the basic and the cutting power - basic power (9kW) is lower than cutting power and minimum of total energy consumption is reached with soft cutting. The middle graph is an intermediate scenario where the basic power value is close to the cutting power and the minimum of the total energy consumption can be reached at specific cutting conditions (see also graph 1 from Fig. 2).

The Figure 6 shows the structure of proposed Machine Energy Optimization System. The system comprises four modules:

Data Acquisition Module - collects and processes power and vibration data in real time
Process Models Calculation Module - creates the power consumption and surface roughness models for specific machine, material, cutting tool and power and vibration patterns.

Objective Function Calculation Module - prepares the input data for real time adaptive control model based on optimization strategy

Real-Time Adaptive Control Module - modifies cutting conditions to implement the optimization strategy.

The difference from the standard adaptive control system structure is in modules marked in yellow. Standard adaptive control system is based on simple material removal rate model and objective function is maximization of material removal rate or in other words the system should keep the maximum permissible load on the tool.

The process of Optimizing machine energy consumption for a specific part includes two stages:
Learning stage - on this stage the workpiece is machined without adaptive control with regular cutting conditions. The system learns the power and vibration patterns of the workpiece for different tools and builds power consumption and surface roughness models for each cutting operation. Based on created models and predefined optimization strategy the system calculates objective function values and constrains to be implemented by adaptive control function.

Operation stage - on this stage the workpiece is machined with adaptive control which modifies the cutting conditions (cutting feed and spindle speed) in real time to achieve the calculated objectives while maintaining the constrains. After each workpiece the power consumption and surface roughness models objective function values are corrected based on collected data.

The benefits of this new approach can be seen in the context of the enormous size of the machine tool industry (400,000 new machines annually) and the massive number of machines in operation throughout the world (over 4,000,000 machines) in the key automotive, aerospace, power generation, machinery manufacturing and virtually every industrial sector. A share of 6 to 8% of the global industry electrical energy demand is estimated to be the respective energy demand of machine tools, trends ascending. In other words, cutting machine tools account for 500 to 700 TWh per year, that corresponds to Germany's total annual electrical energy demand.

The improvements in the energy efficiency of CNC machines over the past decade include new materials, smaller, lighter weight mechanical components and energy efficient electronic components. These improvements reduced the energy consumed by auxiliary equipment (pumps, compressors chip conveyors, etc.) but have not changed the energy consumed by actual cutting. As a result, the cutting energy consumption on new machines is comparable and, in many cases, exceeds the basic non-cutting energy consumption which increases the importance and benefits of the present cutting energy optimization solution.

Those skilled in the art will recognize that, for simplicity and clarity, the full structure and operation of all data processing systems suitable for use with the present disclosure is not being illustrated or described herein. Instead, only so much of a data processing system as is unique to the present disclosure or necessary for an understanding of the present disclosure is illustrated and described. The remainder of the construction and operation of data processing system 100 may conform to any of the various current implementations and practices known in the art.

It is important to note that while the disclosure includes a description in the context of a fully functional system, those skilled in the art will appreciate that at least portions of the present disclosure are capable of being distributed in the form of instructions contained within a machine-usable, computer-usable, or computer-readable medium in any of a

7

variety of forms, and that the present disclosure applies equally regardless of the particular type of instruction or signal bearing medium or storage medium utilized to actually carry out the distribution. Examples of machine usable/readable or computer usable/readable mediums include: nonvolatile, hard-coded type mediums such as read only memories (ROMs) or erasable, electrically programmable read only memories (EEPROMs), and user-recordable type mediums such as floppy disks, hard disk drives and compact disk read only memories (CD-ROMs) or digital versatile disks (DVDs).

Although an exemplary embodiment of the present disclosure has been described in detail, those skilled in the art will understand that various changes, substitutions, variations, and improvements disclosed herein may be made without departing from the spirit and scope of the disclosure in its broadest form.

None of the description in the present application should be read as implying that any particular element, step, or function is an essential element which must be included in the claim scope: the scope of patented subject matter is defined only by the allowed claims.

**Claims**

1. A method for controlling the operation of a CNC machine for machining a workpiece, said method comprising:

   a) during a learning stage machining the workpiece without adaptive control under regular cutting conditions, thereby learning the power and vibration patterns of the workpiece for different tools and building power consumption and surface roughness models for each cutting operation of the machining;
   b) based on the created models and a predefined optimization strategy, calculating objective function values and constrains to be implemented by an adaptive control function;
   c) at an operation stage machining the workpiece with the adaptive control function thereby modifying the cutting conditions, such as cutting feed and spindle speed, in real time to achieve the calculated objective function values while maintaining the constrains. After each workpiece the power consumption and surface roughness models objective function values are corrected based on collected data.

2. The method according to claim 1, wherein after the workpiece is machined, objective function values for the power consumption and the surface roughness models are corrected being based on the data collected during the machining of the workpiece with adaptive control function.

3. The method according to claim 1 or 2, wherein the adaptive control function is evaluating relevant machining parameters in terms of the following dynamic variations that occur during machining:

   i) cutting depth and width variations;
   ii) tool sharpness decrease during machining;
   iii) workpiece material hardness and surface variations;
   iv) chip accumulation;
   v) cooling quality variations;
   vi) fixture instability;

   and other variations inherent in the machining process.

4. A data processing system comprising:

   a processor; and
   an accessible memory, the data processing system particularly configured to execute a method for controlling the operation of a CNC machine for machining a workpiece, the method comprising:

   a) during a learning stage machining the workpiece without adaptive control under regular cutting conditions, thereby learning the power and vibration patterns of the workpiece for different tools and building power consumption and surface roughness models for each cutting operation of the machining;
   b) based on the created models and a predefined optimization strategy, calculating objective function values and constrains to be implemented by an adaptive control function;
   c) at an operation stage machining the workpiece with the adaptive control function thereby modifying the cutting conditions, such as cutting feed and spindle speed, in real time to achieve the calculated objective function values while maintaining the constrains. After each workpiece the power consumption and surface roughness models objective function values are corrected based on collected data.

5. The system according to claim 4, wherein after the workpiece is machined, objective function values for the power consumption and the surface roughness models are corrected being based on the data collected during the machining of the workpiece with the adaptive control function.

6. The system according to claim 4 or 5, wherein the adaptive control function is evaluating relevant machining parameters in terms of the following dynamic variations that occur during machining:

   i) cutting depth and width variations;
   ii) tool sharpness decrease during machining;
   iii) workpiece material hardness and surface variations;
   iv) chip accumulation;
   v) cooling quality variations;
   vi) fixture instability;

and other variations inherent in the machining process.

7. A non-transitory computer-readable medium encoded with executable instructions that, when executed, cause one or more data processing system to execute a method for controlling the operation of a CNC machine for machining a workpiece, the method comprising:

   a) during a learning stage machining the workpiece without adaptive control under regular cutting conditions, thereby learning the power and vibration patterns of the workpiece for different tools and building power consumption and surface roughness models for each cutting operation of the machining;
   b) based on the created models and a predefined optimization strategy, calculating objective function values and constrains to be implemented by an adaptive control function;
   c) at an operation stage machining the workpiece with the adaptive control function thereby modifying the cutting conditions, such as cutting feed and spindle speed, in real time to achieve the calculated objective function values while maintaining the constrains. After each workpiece the power consumption and surface roughness models objective function values are corrected based on collected data.

8. The medium according to claim 7, wherein after the workpiece is machined, objective function values for the power consumption and the surface roughness models are corrected being based on the data collected during the machining of the workpiece with the adaptive control function.

9. The medium according to claim 7 or 8, wherein the adaptive control function is evaluating relevant machining parameters in terms of the following dynamic variations that occur during machining:

   i) cutting depth and width variations;
   ii) tool sharpness decrease during machining;
   iii) workpiece material hardness and surface variations;
   iv) chip accumulation;
   v) cooling quality variations;
   vi) fixture instability;

and other variations inherent in the machining process.

Figure 1

Figure 2

Figure 3

Figure 4

Figure 5

Figure 6

Europäisches
Patentamt
European
Patent Office
Office européen
des brevets

## EUROPEAN SEARCH REPORT

**Application Number**

**EP 24 20 1148**

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | WO 2020/228932 A1 (BIG DATA IN MFG GMBH [DE]) 19 November 2020 (2020-11-19) * the whole document * ----- | 1-9 | INV. G05B19/404 |
| A | US 2007/088455 A1 (FRAUNHOFER HERMANN [DE]) 19 April 2007 (2007-04-19) * paragraphs [0010], [0014], [0016], [0021], [0054] - [0056], [0058], [0062] * ----- | 1-9 | |
| A | CN 113 050 543 B (UNIV HENAN SCIENCE & TECH) 8 February 2022 (2022-02-08) * the whole document * ----- | 1,4,7 | |

**TECHNICAL FIELDS SEARCHED (IPC)**

G05B

The present search report has been drawn up for all claims

| Place of search | Date of completion of the search | Examiner |
|---|---|---|
| The Hague | 21 February 2025 | Salvador, Didier |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 24 20 1148

This annex lists the patent family members relating to the patent documents cited in the above-mentioned European search report.
The members are as contained in the European Patent Office EDP file on
The European Patent Office is in no way liable for these particulars which are merely given for the purpose of information.

21-02-2025

| Patent document cited in search report | | Publication date | Patent family member(s) | | Publication date |
|---|---|---|---|---|---|
| WO 2020228932 | A1 | 19-11-2020 | EP | 3969230 A1 | 23-03-2022 |
| | | | WO | 2020228932 A1 | 19-11-2020 |
| US 2007088455 | A1 | 19-04-2007 | AT | E541250 T1 | 15-01-2012 |
| | | | DE | 102005041175 A1 | 01-03-2007 |
| | | | EP | 1760562 A2 | 07-03-2007 |
| | | | ES | 2376632 T3 | 15-03-2012 |
| | | | US | 2007088455 A1 | 19-04-2007 |
| CN 113050543 | B | 08-02-2022 | NONE | | |

EPO FORM P0459

For more details about this annex : see Official Journal of the European Patent Office, No. 12/82